# EUROPEAN PATENT APPLICATION

(11) **EP 4 813 275 A1**
(43) Date of publication of application: **30.09.2026**
(21) Application number: 25891481.1
(22) Date of filing: 10.11.2025
(51) Int. Cl.: A47L 11/40

(54) **CONTROL METHOD FOR SELF-MOVING CLEANING DEVICE, AND DEVICE**

(30) Priority: 18.11.2024 CN 202411648475
(71) Applicant: Dreame Innovation Technology (Suzhou) Co., Ltd., Suzhou, Jiangsu 215000 (CN)
(72) Inventor: ZHANG, Hailong, Suzhou, Jiangsu 215000 (CN); ZHANG, Jiahui, Suzhou, Jiangsu 215000 (CN)
(74) Representative: Gill Jennings & Every LLP
(86) International application number: PCT/CN2025/133922
(87) International publication number: WO 2026/103667

(57) **Abstract**

Provided are a method and apparatus for controlling an autonomous mobile cleaning device. The method includes: identifying and determining an obstacle during execution of a cleaning task by the autonomous mobile cleaning device, and acquiring (S201) a cable obstacle image upon determining that the obstacle is a cable obstacle; and determining (S202) position coordinates of a cable in the image, and avoiding the cable obstacle on the basis of the position coordinates. Determining position coordinates of a cable in the image includes: determining a cable neighbouring region in the cable obstacle image, determining a connecting line between the position coordinates of each pixel point in the cable neighbouring region and the position coordinates of the cable obstacle determining the position coordinates of the cable obstacle on the basis of the connecting lines. The cable neighbouring region includes at least an envelope region of the cable obstacle; the envelope region being an enclosed region created around a boundary of the cable obstacle region.

## Description

The present application claims priority to Chinese Patent Application No. 202411648475.1, filed with the China National Intellectual Property Administration on November 18, 2024 and entitled "METHOD AND APPARATUS FOR CONTROLLING AUTONOMOUS MOBILE CLEANING DEVICE", which is incorporated herein by reference in its entirety.

### TECHNICAL FIELD

The present application relates to the field of smart robots, and in particular to a method and apparatus for controlling an autonomous mobile cleaning device.

### BACKGROUND

In the technical fields of automation and robotics, especially in the applications of autonomous mobile robots such as floor-cleaning robots, the identification and avoidance of obstacles is one of the critical tasks to ensure the safe operation of devices. However, since cable obstacles, such as power cables, network cables and charging cables, have irregular morphologies and are possibly distributed in various orientations and positions, if these obstacles are not accurately identified, they may be entangled in driving wheels of the floor-cleaning robots during cleaning, and accordingly the operation of the floor-cleaning robots is affected.

In the prior art, the autonomous mobile robots typically identify the cable obstacles by using a bounding box detection algorithm, which defines the position and the extent of an object by using a rectangular box, while cables are typically elongated and curved and may be arbitrarily distributed in space, so that using the rectangular boxes to represent the positions of the cables results in low positioning accuracy.

However, due to the complex morphologies of the cables, different annotators may provide inconsistent annotations for the same cable. This inconsistency affects the detection result of the algorithm, thus resulting in the reduced identification accuracy when the autonomous mobile robots detect the positions of the cables.

### SUMMARY

The present application provides a method and apparatus for controlling an autonomous mobile cleaning device, which can effectively identify the position of a cable obstacle by taking into account a connecting line between each pixel point in a cable neighbouring region and the cable obstacle and accurately positioning the cable obstacle on the basis of the connecting lines.

In a first aspect, the present application provides a method for controlling an autonomous mobile cleaning device. The method is applied to the autonomous mobile cleaning device and includes:
identifying an obstacle during execution of a cleaning task by the autonomous mobile cleaning device, and acquiring a cable obstacle image upon determining that the obstacle is a cable obstacle; and
determining position coordinates of a cable in the cable obstacle image, and avoiding the cable obstacle on the basis of the position coordinates,
where determining position coordinates of a cable in the cable obstacle image includes:
   determining a cable neighbouring region in the cable obstacle image, determining a connecting line between the position coordinates of each pixel point in the cable neighbouring region and the position coordinates of the cable obstacle, and determining the position coordinates of the cable obstacle on the basis of the connecting lines, the cable neighbouring region including at least an envelope region of the cable obstacle, the envelope region being an enclosed region created around a boundary of the cable obstacle region.

In this way, during the execution of the cleaning task by the autonomous mobile cleaning device, the position of the cable obstacle can be accurately determined by means of detailed analysis of the connecting lines between the pixel points and the cable obstacle. After the position coordinates are determined, a path can be planned more efficiently to avoid potential collision or disturbance, the physical contact of the device with cables can thus be reduced, the risk of entanglement and damage to the cables or the device itself can be reduced, and the cleaning task can be completed more efficiently while improving the safety.

Optionally, determining the position coordinates of the cable obstacle on the basis of the connecting lines includes:
determining the position coordinates of the cable obstacle on the basis of distances of the connecting lines, where the distance of each connecting line is a minimum distance of the connecting line between the position coordinates of the corresponding pixel point in the cable neighbouring region and the position coordinates of the cable obstacle.

In this way, since the distance from each pixel point within the cable neighbouring region to the cable obstacle is taken into account, the cable obstacle can be accurately positioned by calculating and comparing the minimum distances, and the position of the cable obstacle can thus be effectively identified. Especially in complex environments, the cable obstacle may have an irregular shape, and the connecting line-based distance calculation method can adapt to these complexities and provide a more reliable positioning result.

Optionally, determining a cable neighbouring region in the cable obstacle image includes:
acquiring a predefined neighbourhood window, and calculating a neighbourhood feature of each pixel point of the cable obstacle image within the predefined neighbourhood window; and
performing threshold segmentation on the pixel points of the cable obstacle image according to the neighbourhood features to obtain the cable neighbouring region and a non-cable neighbouring region,
where the autonomous mobile cleaning device does not process the non-cable neighbouring region.

In this way, by identifying and ignoring the non-cable neighbouring region, a processing speed can be increased. Moreover, the cable neighbouring region and non-cable neighbouring region are determined by means of the neighbourhood segmentation method described above, the cable neighbouring region worthy of attention can be more accurately determined, and thus the accuracy of subsequent identification of the cable obstacle can be improved.

Optionally, determining position coordinates of a cable in the cable obstacle image includes:
inputting the cable obstacle image into a trained cable detection model to predict the position coordinates of the cable obstacle in the cable obstacle image.

In this way, by using the trained cable detection model to predict the position coordinates of the cable obstacle, the cable obstacle can be identified with high accuracy in complex backgrounds, and the cable detection model adapts to a variety of environmental changes, has strong robustness, can also adapt to a new environment or identify multiple types of cable obstacles by migration learning or further training, and has good extendibility.

Optionally, the cable detection model includes a classification model and a regression model; and inputting the cable obstacle image into a trained cable detection model to predict the position coordinates of the cable obstacle in the cable obstacle image includes:
inputting the cable obstacle image into a trained classification model to obtain the cable neighbouring region in the cable obstacle image; and
inputting the cable neighbouring region into a trained regression model to obtain the position coordinates of the cable obstacle in the cable neighbouring region.

In this way, by decomposing the model prediction into two steps of classification and regression, the present application can optimize the performance of each model separately and improve the overall detection accuracy. The classification model first narrows a range of the region that requires accurate positioning, reducing the computational burden of the regression model and improving the processing efficiency. The trained regression model then can be used to perform the accurate regression-based positioning, to fit the irregular shape of the cable obstacle, so as to identify and accurately position the cable, thereby outputting the specific position of the cable.

Optionally, the cable detection model is a neural network model based on deep learning.

It should be noted that the neural network model based on deep learning is excellent in image identification and classification tasks and can process complex image features and provide high-accuracy detection results. Moreover, the neural network model based on deep learning can effectively identify a target object in complex and varying backgrounds, and is suitable for cable detection in a variety of environments and conditions. In particular, this model has strong robustness against noise, occlusion and lighting variations, and can adapt to different image qualities and environmental conditions.

In this way, the neural network model based on deep learning can identify the cable and accurately locate the specific position thereof.

Optionally, a training process of the cable detection model includes:
acquiring a training data set, the training data set including a plurality of training samples, each training sample including a cable obstacle image and the position coordinates of the cable obstacle in the cable obstacle image; and
inputting the training data set into the cable detection model for training to obtain a trained cable detection model; and
the training process includes: determining the cable neighbouring region of each cable obstacle image, and determining a minimum distance corresponding to the connecting line between the position coordinates of each pixel point in the cable neighbouring region and the position coordinates of the cable obstacle, and performing regression training by using the connecting lines corresponding to the minimum distances, the position coordinates of the pixel point corresponding to each connecting line, and the position coordinates of the cable obstacle.

In this way, the model can accurately determine the position of the cable obstacle by calculating the minimum distances and performing the regression training, improving the detection accuracy. Thus, by means of the accurate regression training, the model can decrease errors in position prediction and improve the overall reliability. The cable detection model can automatically learn complex features in the images, reducing the dependence on manual operations.

Optionally, the cable detection model includes a classification model and a regression model; and inputting the training data set into the cable detection model for training to obtain a trained cable detection model includes:
acquiring, for each cable obstacle image, an annotated cable neighbouring region in the cable obstacle image;
inputting the plurality of cable obstacle images and the cable neighbouring region corresponding to each cable obstacle image into the classification model for training, to obtain a trained classification model;
inputting the plurality of cable neighbouring regions and the position coordinates of the cable obstacle in the cable neighbouring regions into the regression model for training, to obtain a trained regression model; and
integrating the trained classification model and the trained regression model to obtain a trained cable detection model.

In this way, by integrating the classification model and the regression model, a possible cable neighbouring region can be identified, the position of the cable can then be determined accurately, so that the overall detection accuracy is improved. Moreover, the separate training and optimization of the classification model and the regression model make the overall design more modular, and facilitate maintenance and extension. The classification model first narrows the range of the region that requires accurate processing, effectively filtering out unrelated regions, reducing the computational burden of the regression model, and improving the processing efficiency. Thus, the regression model accurately positions the cable obstacle, thereby improving the positioning accuracy.

Optionally, a training process of the regression model includes:
acquiring the position coordinates of each pixel point in the cable neighbouring region;
calculating, for each pixel point, a plurality of distances between the pixel point and a plurality of pixel points corresponding to the cable obstacle respectively by using the position coordinates of the pixel point and the position coordinates of the cable obstacle;
determining a minimum distance among the plurality of distances, and determining a connecting line between the pixel points corresponding to the minimum distance; and
performing the regression training by using the determined connecting line between the pixel points corresponding to the minimum distance, the position coordinates of the pixel point corresponding to each connecting line, and the position coordinates of the cable obstacle.

In this way, by using the minimum distance between the pixel points, the model can accurately capture the position of the cable obstacle, improving the positioning accuracy. This minimum distance is determined by precise calculation based on the connecting lines, so that the model can decrease errors in position prediction and improve the overall reliability.

Optionally, avoiding the cable obstacle on the basis of the position coordinates includes at least one of the following:
re-planning a cleaning route on the basis of the position coordinates of the cable obstacle, such that the autonomous mobile cleaning device performs a cleaning task along the cleaning route to avoid the cable obstacle;
determining a cleaning exclusion region on the basis of the position coordinates of the cable obstacle, such that the autonomous mobile cleaning device performs cleaning around the cleaning exclusion region and then continues to perform the cleaning task along an originally planned path; and
sending the position coordinates of the cable obstacle to a user terminal for display, and avoiding the cable obstacle in response to a user's control operation.

In this way, after the autonomous mobile cleaning device determines the position coordinates of the cable obstacle, a variety of ways can be provided to adapt to different environmental changes and user demands by avoiding the cable obstacle, and the risk of the device colliding with the cable obstacle can also be reduced while improving the application flexibility, thereby protecting the device and other articles in the environment.

In a second aspect, the present application provides a method for controlling an autonomous mobile cleaning device, where the method is applied to a user terminal and includes:
receiving position coordinates of a cable in a cable obstacle image that are determined during execution a cleaning task and sent by the autonomous mobile cleaning device, and visually displaying the position coordinates,
where determining position coordinates of a cable in the cable obstacle image includes:
   identifying an obstacle, and acquiring a cable obstacle image upon determining that the obstacle is a cable obstacle; and
   determining a cable neighbouring region in the cable obstacle image, determining a connecting line between the position coordinates of each pixel point in the cable neighbouring region and the position coordinates of the cable obstacle, and determining the position coordinates of the cable obstacle on the basis of the connecting lines, the cable neighbouring region including at least an envelope region of the cable obstacle, the envelope region being an enclosed region created around a boundary of the cable obstacle region.

It can be understood that by displaying the position of the cable obstacle on the user terminal, a user can take a preventive measure to avoid the collision between the autonomous mobile cleaning device and the cable obstacle, so as to protect the autonomous mobile cleaning device and a surrounding environment.

In this way, by providing the real-time visual content and an interactive function, the opportunity for the user to participate in the operation of the device is increased, and the user experience and satisfaction are improved. Moreover, the user can dynamically adjust cleaning strategies of the device on the basis of the visual content displayed in real time, more accurately control the behaviours of the device, reduce the likelihood of misoperation, and thus reduce the risk of damage to the autonomous mobile cleaning device.

In a third aspect, the present application provides an autonomous mobile cleaning device, including: a processor, and a memory communicatively connected to the processor, where
the memory is configured to store computer-executable instructions; and
the processor executes the computer-executable instructions stored in the memory, to implement the method of any one item of the first aspect.

In a fourth aspect, the present application provides an apparatus for controlling an autonomous mobile cleaning device, where the apparatus is applied to the autonomous mobile cleaning device and includes:
an identification module configured to identify an obstacle during execution of a cleaning task by the autonomous mobile cleaning device, and acquire a cable obstacle image upon determining that the obstacle is a cable obstacle; and
a determination module configured to determine position coordinates of a cable in the cable obstacle image, and avoid the cable obstacle on the basis of the position coordinates,
where determining position coordinates of a cable in the cable obstacle image includes:
   determining a cable neighbouring region in the cable obstacle image, determining a connecting line between the position coordinates of each pixel point in the cable neighbouring region and the position coordinates of the cable obstacle, and determining the position coordinates of the cable obstacle on the basis of the connecting lines, the cable neighbouring region including at least an envelope region of the cable obstacle, the envelope region being an enclosed region created around a boundary of the cable obstacle region.

In a fifth aspect, the present application provides an apparatus for controlling an autonomous mobile cleaning device, where the apparatus is applied to a user terminal and includes:
a receiving module configured to receive position coordinates of a cable in a cable obstacle image that are determined during execution a cleaning task and sent by the autonomous mobile cleaning device, and visually display the position coordinates,
where determining position coordinates of a cable in the cable obstacle image includes:
   identifying an obstacle, and acquiring a cable obstacle image upon determining that the obstacle is a cable obstacle; and
   determining a cable neighbouring region in the cable obstacle image, determining a connecting line between the position coordinates of each pixel point in the cable neighbouring region and the position coordinates of the cable obstacle, and determining the position coordinates of the cable obstacle on the basis of the connecting lines, the cable neighbouring region including at least an envelope region of the cable obstacle, the envelope region being an enclosed region created around a boundary of the cable obstacle region.

In a sixth aspect, the present application provides a computer-readable storage medium. The computer-readable storage medium stores computer-executable instructions. The computer-executable instructions are configured to implement, when executed by a processor, the method of any one item of the first aspect.

In a seventh aspect, the present application provides a computer program product, including a computer program. The computer program implements, when executed by a processor, the method of any one item of the first aspect.

In summary, the present application provides a method and apparatus for controlling an autonomous mobile cleaning device. During the execution of the cleaning task by the autonomous mobile cleaning device, after the cable obstacle is identified, the cable neighbouring region of the cable in the image is identified by acquiring the cable obstacle image. The cable neighbouring region includes at least the envelope region of the cable obstacle. The envelope region is the enclosed region created around the boundary of the cable obstacle. Further, the connecting line between the position coordinates of each pixel point in the cable neighbouring region and the position coordinates of the cable obstacle is found, these connecting lines share common intersection points with the cable obstacle, and these common intersection points can better fit the unfixed morphology of the cable. Further, on the basis of these connecting lines, the position coordinates of the cable obstacle are accurately determined, and the autonomous mobile cleaning device then adjusts its path planning by using the determined position coordinates of the cable, to avoid the cable obstacle and ensure smooth execution of the cleaning task. In this way, by means of accurate image analysis and position computation based on the connecting lines, the accuracy of the position identification of the cable obstacle is improved. Moreover, by means of the accurate identification and avoidance from the cable obstacle, the failure and damage to the autonomous mobile cleaning device caused by cable entanglement or pulling are decreased, and the safety and reliability of the device are improved.

### BRIEF DESCRIPTION OF DRAWINGS

The drawings herein, which are incorporated into the description and constitute a part of the description, illustrate embodiments that conform to the present application and are used together with the description to explain the principles of the present application.
FIG. 1 shows a schematic diagram of an application scenario according to an embodiment of the present application.
FIG. 2 is a schematic flowchart of an autonomous mobile cleaning device control method according to an embodiment of the present application.
FIG. 3 shows a schematic diagram of a scenario where a user terminal interacts with the autonomous mobile cleaning device according to an embodiment of the present application.
FIG. 4 shows a structural schematic diagram of an apparatus for controlling an autonomous mobile cleaning device according to an embodiment of the present application.
FIG. 5 shows a structural schematic diagram of an autonomous mobile cleaning device according to an embodiment of the present application.

Specific embodiments of the present application have been shown by the drawings, which are described below in more detail. These drawings and textual description are not intended to limit the scope of the concept of the present application in any way, but rather to illustrate the concept of the present application for a person skilled in the art by reference to specific embodiments.

### DESCRIPTION OF EMBODIMENTS

Exemplary embodiments are described in detail herein, with examples shown in the accompanying drawings. When the following description relates to the accompanying drawings, the same numbers in different accompanying drawings represent the same or similar elements, unless specified otherwise. Implementations described in the following exemplary embodiments do not represent all implementations consistent with the present application. Instead, the implementations are merely examples of apparatuses and methods consistent with some aspects of the present application as detailed in the appended claims.

In order to facilitate clear description of the technical solutions of embodiments of the present application, in embodiments of the present application, terms such as "first" and "second" are used to distinguish between same items or similar items having substantially the same function and role. For example, a first device and a second device are merely intended to distinguish between different devices and do not limit their sequential order. A person skilled in the art may understand that the terms such as "first" and "second" do not define a number or an execution sequence, and the terms such as "first" and "second" do not indicate a definite difference.

It should be noted that in the present application, the words "for example" or "such as" are used as examples, illustrations, or descriptions. Any embodiment or design described as "for example" or "such as" in the present application shall not be construed as more preferred or advantageous over other embodiments or designs. Specifically, the use of words such as "for example" or "such as" is intended to present relevant concepts in a concrete manner.

In the present application, "at least one" means one or more, and "a plurality of" means two or more. "And/or" is used to describe an association relationship between associated objects, which indicates that three relationships may exist. For example, A and/or B may indicate that only A exists, both A and B exist, or only B exists, where A or B may be singular or plural. The character "/" generally indicates an "or" relationship between the associated objects. "At least one of the following items" or a similar expression is any combination of these items, including a single item or any combination of a plurality of items. For example, at least one of a, b, or c may indicate a, b, c, a-b, a-c, b-c, or a-b-c, where a, b, or c may be singular or plural.

An autonomous mobile cleaning device is an autonomous mobile robot specially designed for executing cleaning tasks, for example, a floor-cleaning robot and an automatic floor scrubber, and is used for sweeping surfaces to be cleaned, vacuuming, wet-mopping and the like to keep an environment clean.

In a possible implementation, the autonomous mobile cleaning device can identify cable obstacles by using a bounding box detection algorithm and avoiding the cable obstacles during cleaning.

However, since the bounding box detection algorithm represents the position and the extent of an object by using a rectangular box, the irregular morphology of a cable obstacle cannot be represented appropriately by using the rectangular box, and it is thus difficult to determine the true position of the cable obstacle, causing the erroneous judgment of the autonomous mobile cleaning device in avoiding the obstacles. Moreover, in an annotation phase, there may be ambiguity in how to define the boundary of the cable obstacle, especially in the case of cable being entangled or partially blocked. Therefore, the bounding box detection algorithm is generally designed for objects having clear boundaries and shapes, but has poor adaptability for cables without fixed morphology.

It can be understood that if the position of the cable obstacle is not accurately identified during the cleaning process of the autonomous mobile cleaning device, the cable obstacle may be entangled in a driving wheel of the autonomous mobile cleaning device, causing the autonomous mobile cleaning device to stop working or to be damaged. The autonomous mobile cleaning device may also pull the cable obstacle, causing articles on a table or a chair to fall, resulting in user losses, and affecting user experience.

In another possible implementation, the autonomous mobile cleaning device may identify objects and terrain in an environment by means of semantic segmentation, and perform obstacle avoidance, navigation, path planning, etc. This semantic segmentation is a deep learning algorithm that associates a label or category with each pixel of an image to identify a set of pixels forming distinguishable categories, and each pixel in the set of pixels is annotated as a specific category.

Annotation of pixel categories is a time-consuming and expensive process, especially when high accuracy is required. Therefore, during the cleaning process of the autonomous mobile cleaning device, although the morphology and the position of the cable can be identified by using the semantic segmentation to identify the cable obstacle, massive volumes of pixel-level data are required to be processed, resulting in high computational complexity, especially in real-time applications. This may lead to delay and thus affect the obstacle avoidance effect of the autonomous mobile cleaning device.

To solve the above problems, the present application provides a method for controlling an autonomous mobile cleaning device. During the execution of the cleaning task by the autonomous mobile cleaning device, after the cable obstacle is identified, the cable neighbouring region of the cable in the image is identified by acquiring the cable obstacle image. The cable neighbouring region includes at least the envelope region of the cable obstacle. The envelope region is the enclosed region created around the boundary of the cable obstacle. Further, the connecting line between the position coordinates of each pixel point in the cable neighbouring region and the position coordinates of the cable obstacle is found, these connecting lines share common intersection points with the cable obstacle, and these common intersection points can better fit the unfixed morphology of the cable. Further, on the basis of these connecting lines, the position coordinates of the cable obstacle are accurately determined, and the autonomous mobile cleaning device then adjusts its path planning by using the determined position coordinates of the cable, to avoid the cable obstacle and ensure smooth execution of the cleaning task. In this way, by means of accurate image analysis and position computation based on the connecting lines, the accuracy of the position identification of the cable obstacle is improved. Moreover, by means of the accurate identification and avoidance from the cable obstacle, the failure and damage to the autonomous mobile cleaning device caused by cable entanglement or pulling are decreased, and the safety and reliability of the device are improved.

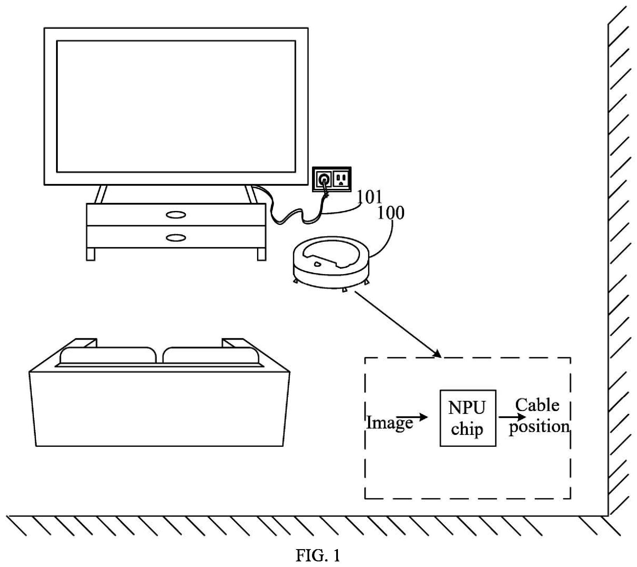

By way of example, FIG. 1 is a schematic diagram of an application scenario according to an embodiment of the present application. As shown in FIG. 1, this application scenario is a scenario where the autonomous mobile cleaning device executes a cleaning task. Taking a floor-cleaning robot as an example, the application scenario includes: a floor-cleaning robot 100 and a cable obstacle 101. The floor-cleaning robot 100 has a built-in neural processing unit (NPU) chip. The NPU chip is configured to perform the method of the embodiment of the present application.

During execution of a cleaning task by the floor-cleaning robot 100 in a living room, when the cable obstacle 101 is identified, an image of the cable obstacle 101 can be acquired. The image may be an RGB (Red, Green, Blue) image captured by an RGB camera, and the types of the image and the camera device are not specifically limited in the embodiments of the present application.

Further, the RGB image is transmitted to the NPU chip of the floor-cleaning robot 100. The NPU chip processes the RGB image, determines the position coordinates of the cable obstacle 101 in the image, thus avoids the cable obstacle 101 on the basis of the position coordinates, and continues to execute the cleaning task.

Part of a cable of the cable obstacle 101 is located on a surface to be cleaned, and the remaining cable is suspended. The image of the cable obstacle 101 captured by the floor-cleaning robot 100 includes at least an image of the part of the cable located on the surface to be cleaned.

Optionally, if the image of the cable obstacle 101 captured by the floor-cleaning robot 100 is the image of the part of the cable on the surface to be cleaned, the remaining cable higher than the floor-cleaning robot 100 is not required to be captured, because the remaining cable may not affect the floor-cleaning robot 100 in executing the cleaning task. In this way, the processing requirements for image data can be reduced, and the processing efficiency can be improved.

Optionally, if the image of the cable obstacle 101 captured by the floor-cleaning robot 100 is an image corresponding to the entire cable within a scannable field of view of the floor-cleaning robot 100, this image may include a part of the cable higher than the floor-cleaning robot 100, and the NPU chip can utilize a projection algorithm to perform projection processing on the cable in the image and thus determines the position coordinates of the cable obstacle 101 in the image after the projection processing.

It should be noted that the method for controlling an autonomous mobile cleaning device can also be applied to a shopping mall scenario, a school scenario and an office scenario, the specific application scenario of the method for controlling an autonomous mobile cleaning device is not limited in the embodiments of the present application, and the above is merely illustrative.

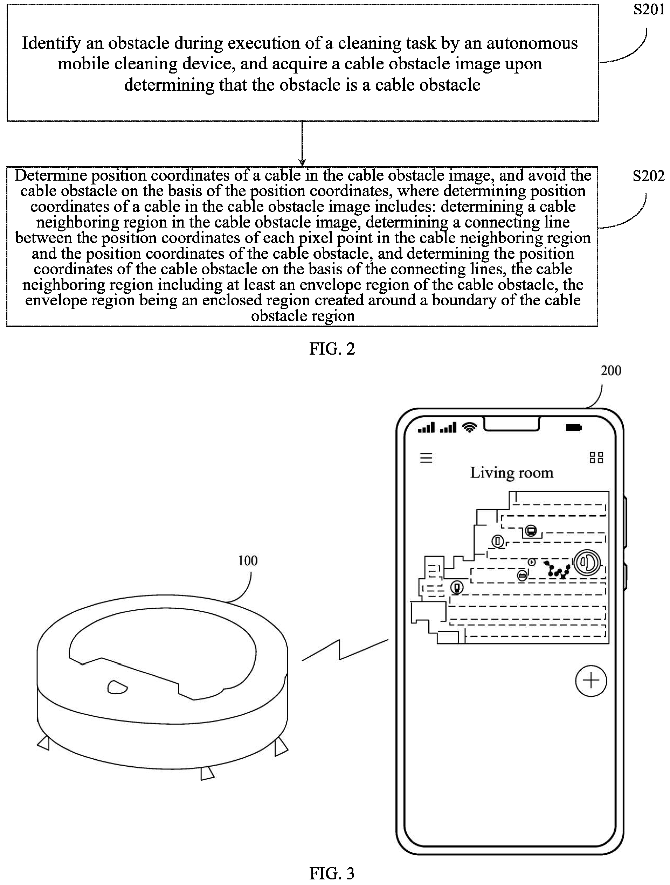

By way of example, FIG. 2 is a schematic flowchart of the method for controlling an autonomous mobile cleaning device according to an embodiment of the present application. As shown in FIG. 2, the method for controlling an autonomous mobile cleaning device is applied to the autonomous mobile cleaning device, and the entity that executes the method for controlling an autonomous mobile cleaning device may be the NPU chip mentioned above, or may be a processor or controller in the autonomous mobile cleaning device, which is not specifically limited in the embodiments of the present application. The method includes the following steps.

In step S201, an obstacle is identified during execution of a cleaning task by the autonomous mobile cleaning device, and a cable obstacle image is acquired upon determining that the obstacle is a cable obstacle.

In the present application, during the execution of the cleaning task by the autonomous mobile cleaning device, a surrounding environment may be scanned by using a sensor, for example, a camera, a lidar, an infrared sensor, or an ultrasonic sensor, to determine whether an obstacle is present in the surrounding environment. The type of the sensor that identifies the obstacle is not specifically limited in the embodiments of the present application.

After it is determined that an obstacle is present, the type of the obstacle can be identified based on a computer vision technology, such as an artificial intelligence (AI) algorithm, an image processing algorithm, etc. The method for identifying the type of the obstacle is not specifically limited in the embodiments of the present application.

Further, after it is determined that the obstacle is a cable obstacle, a cable obstacle image can be acquired for further analysis and processing.

It should be noted that the content in the cable obstacle image acquired by the autonomous mobile cleaning device is not specifically limited in the embodiments of the present application, which may be determined on the basis of a functional setting of the autonomous mobile cleaning device, but the cable obstacle image includes at least an image of a cable located on a surface to be cleaned.

In step S202, position coordinates of a cable in the cable obstacle image are determined, and the cable obstacle is avoided on the basis of the position coordinates.

Determining position coordinates of a cable in the cable obstacle image includes:
determining a cable neighbouring region in the cable obstacle image, determining a connecting line between the position coordinates of each pixel point in the cable neighbouring region and the position coordinates of the cable obstacle, and determining the position coordinates of the cable obstacle on the basis of the connecting lines. The cable neighbouring region includes at least an envelope region of the cable obstacle. The envelope region is an enclosed region created around a boundary of the cable obstacle region.

In the embodiment of the present application, the envelope region is a closed convex polygon which includes all the points in sets of points corresponding to the cable obstacle region and is smallest in area among all the convex regions which may include these sets of points. The envelope region is an enclosed region created around the boundary of the cable obstacle, so that it can be ensured that all possible cable obstacles are taken into account.

In this step, the image including the cable obstacle is acquired, the cable neighbouring region of the cable obstacle in the image is determined, and the cable neighbouring region includes at least the envelope region of the cable obstacle. Further, the position coordinates of each pixel point within the cable neighbouring region are identified, and are typically represented by the pixel position of the image. Further, the connecting line between the position coordinates of each pixel point and the position coordinates of the cable obstacle is determined, and the position coordinates of the cable obstacle are determined on the basis of the connecting lines by using a predefined algorithm.

The predefined algorithm may be a minimum value algorithm, a Euclidean distance algorithm, a Dijkstra algorithm, etc., which is not specifically limited in the embodiments of the present application.

Optionally, determining the position coordinates of the cable obstacle on the basis of the connecting lines includes:
determining the position coordinates of the cable obstacle on the basis of distances of the connecting lines, where the distance of each connecting line is a minimum distance of the connecting line between the position coordinates of the corresponding pixel point in the cable neighbouring region and the position coordinates of the cable obstacle.

By way of example, for each pixel point, the connecting line between the pixel point and the cable obstacle can be calculated. By analysing the distances of the connecting lines, it can be determined which pixel point or pixel points have the minimum connecting line distance to the cable obstacle, and these pixel points having the minimum distance are used for assisting in determining the accurate position coordinates of the obstacle.

In this way, since the distance from each pixel point within the cable neighbouring region to the cable obstacle is taken into account, the cable obstacle can be accurately positioned by calculating and comparing the minimum distances, and the position of the cable obstacle can thus be effectively identified. Especially in complex environments, the cable obstacle may have an irregular shape, and the connecting line-based distance calculation method can adapt to these complexities and provide a more reliable positioning result.

In the present application, after the position coordinates of the cable obstacle are determined, path planning or operation adjustment may be performed on the basis of the position coordinates of the cable obstacle to avoid the cable obstacle. The operation adjustment may involve the adjustment of a movement path of the device to ensure no collision with the cable obstacle. The avoidance strategy adopted is not specifically limited in the embodiments of the present application.

Therefore, during the execution of the cleaning task by the autonomous mobile cleaning device, the position of the cable obstacle can be accurately determined by means of detailed analysis of the connecting lines between the pixel points and the cable obstacle. After the position coordinates are determined, a path can be planned more efficiently to avoid potential collision or disturbance, the physical contact of the device with cables can thus be reduced, the risk of entanglement and damage to the cables or the device itself can be reduced, and the cleaning task can be completed more efficiently while improving the safety.

It can be understood that the demands for manual intervention are decreased because the above process can be performed automatically by means of the algorithm, and the above method relies on data computation instead of visual or other imprecise methods, so that the accuracy and consistency of positioning are improved.

Optionally, determining a cable neighbouring region in the cable obstacle image includes:
acquiring a predefined neighbourhood window, and calculating a neighbourhood feature of each pixel point of the cable obstacle image within the predefined neighbourhood window; and
performing threshold segmentation on the pixel points of the cable obstacle image according to the neighbourhood features to obtain the cable neighbouring region and a non-cable neighbouring region.

The autonomous mobile cleaning device does not process the non-cable neighbouring region.

It should be noted that the cable neighbouring region and the non-cable neighbouring region jointly form the cable obstacle image, and the two regions do not overlap. Since no cable obstacle is present in the non-cable-like region, the non-cable-like region is not processed, and thus the processing efficiency is optimized.

In the present application, the cable obstacle image is segmented. Unlike a conventional segmentation method, since the cable is not a convex polygon and polygonal fitting cannot be used, the NPU chip uses a neighbourhood segmentation method for the cable obstacle image to obtain the non-cable region and the cable neighbouring region. Since the cable is special and has no regular shape and an accurate region cannot be obtained in one step, the cable neighbouring region is an approximate region of the cable obstacle obtained by means of the neighbourhood segmentation.

In this step, the size of the predefined neighbourhood window is selected for analyzing a local feature of each pixel point in the image, and the predefined neighbourhood window may be a fixed-size rectangular or square region, which is not specifically limited in the embodiments of the present application.

Further, for each pixel point in the image, the neighbourhood features within the predefined neighbourhood window are calculated, which, for example, may include information such as colour, brightness and textures, and thus which pixel points belong to the cable obstacle can be identified by analysing these neighbourhood features.

Further, on the basis of the computed neighbourhood features, the threshold segmentation is performed on the pixel points in the image. That is, appropriate thresholds are selected to classify the pixel points into the cable neighbouring region and the non-cable neighbouring region.

The thresholds may be selected on the basis of experience, statistical analysis, a machine learning method, etc., to ensure accurate segmentation. The values of the thresholds are not specifically limited in the embodiments of the present application.

In this way, by identifying and ignoring the non-cable neighbouring region, a processing speed can be increased. Moreover, the cable neighbouring region and non-cable neighbouring region are determined by means of the neighbourhood segmentation method described above, the cable neighbouring region worthy of attention can be more accurately determined, and thus the accuracy of subsequent identification of the cable obstacle can be improved.

Optionally, during the segmentation of the cable neighbouring region and the non-cable neighbouring region, pixel-by-pixel segmentation may also be performed by using a semantic segmentation method, and the boundaries of two image sub-regions segmented are clear and are respectively the cable neighbouring region and the non-cable neighbouring region. The segmentation method for obtaining the cable neighbouring region and the non-cable neighbouring region is not specifically limited in the embodiments of the present application.

Optionally, determining position coordinates of a cable in the cable obstacle image includes:
inputting the cable obstacle image into a trained cable detection model to predict the position coordinates of the cable obstacle in the cable obstacle image.

In the embodiments of the present application, determining the position coordinates of the cable in the cable obstacle image by using the trained cable detection model is a machine learning-based method. The specific type of the cable detection model is not specifically limited in the embodiments of the present application. For example, the cable detection model may be a convolutional neural network, a recurrent neural network model, an auto-encoder model, a generative adversarial network model, a variational auto-encoder, etc.

By way of example, the cable obstacle image to be processed is input into the trained cable detection model, and the model extracts image features by means of a neural network layer thereof. Further, the model analyses the image features and predicts the position coordinates of the cable obstacle.

Therefore, by using the trained cable detection model to predict the position coordinates of the cable obstacle, the cable obstacle can be identified with high accuracy in complex backgrounds, and the cable detection model adapts to a variety of environmental changes, has strong robustness, can also adapt to a new environment or identify multiple types of cable obstacles by migration learning or further training, and has good extendibility.

Optionally, the cable detection model is a neural network model based on deep learning.

By way of example, as shown in FIG. 1, the NPU chip processes the RGB image by using a pre-trained neural network model to identify and determine the accurate position of the cable. The neural network model is pre-trained by learning annotation results of cables in a large number of images.

It should be noted that the neural network model based on deep learning is excellent in image identification and classification tasks and can process complex image features and provide high-accuracy detection results. Moreover, the neural network model based on deep learning can effectively identify a target object in complex and varying backgrounds, and is suitable for cable detection in a variety of environments and conditions. In particular, this model has strong robustness against noise, occlusion and lighting variations, and can adapt to different image qualities and environmental conditions.

In this way, the neural network model based on deep learning can identify the cable and accurately locate the specific position thereof.

The neural network model based on deep learning includes regression processing to output the position coordinates of the cable obstacle. Therefore, the inaccurate cable boundary caused by the neighbourhood segmentation can be offset by accurate regression-based positioning, to obtain the accurate position of the cable.

Optionally, the cable detection model includes a classification model and a regression model; and inputting the cable obstacle image into a trained cable detection model to predict the position coordinates of the cable obstacle in the cable obstacle image includes:
inputting the cable obstacle image into a trained classification model to obtain the cable neighbouring region in the cable obstacle image; and
inputting the cable neighbouring region into a trained regression model to obtain the position coordinates of the cable obstacle in the cable neighbouring region.

It should be noted that regression is a predictive action to form a value, which is different from the conventional bounding box detection method where a rectangular detection box is formed by means of regression, while the regression model of the present application is the regression of a neighbouring position of the cable, that is, the coordinates of the pixel point corresponding to the cable obstacle.

By way of example, the cable obstacle image is input into the trained classification model, and thus an image output by the model includes the cable neighbouring region. The classification model has been trained with massive volumes of annotation data and can identify regions including the cable in the image.

Further, the cable neighbouring region identified by the classification model is input into the trained regression model, and the model outputs the accurate position coordinates of the cable obstacle. By learning the position features of the cable in the image, the regression model can predict the accurate position coordinates of the cable.

For example, a prediction process of the regression model includes: predicting the cable position closest to each pixel point in the cable neighbouring region, for example, making a perpendicular line to the cable for pixel point A in the cable neighbouring region, that is, finding a minimum distance of the connecting line between pixel point A and the cable obstacle region, so as to obtain the position of pixel point B of the cable obstacle; obtaining position B by means of the regression of pixel point A; by analogy, obtaining the positions (B1, B2, ..., Bn) of all pixel points of the cable obstacle by performing the above operation on each pixel point (A1, A2, ..., An) in the cable neighbouring region. B1, B2, ..., Bn are pixel points located on the cable obstacle, and thus the regression model accurately predicts the position of the entire cable obstacle.

It can be understood that the regression model identifies the cable obstacle and accurately determines the specific position thereof, thereby solving the problem of the cable being not accurately positioned in the cable neighbouring region obtained by means of neighbouring region segmentation.

In this way, by decomposing the model prediction into two steps of classification and regression, the present application can optimize the performance of each model separately and improve the overall detection accuracy. The classification model first narrows a range of the region that requires accurate positioning, reducing the computational burden of the regression model and improving the processing efficiency. The trained regression model then can be used to perform the accurate regression-based positioning, to fit the irregular shape of the cable obstacle, so as to identify and accurately position the cable, thereby outputting the specific position of the cable.

It should be noted that the classification model and the regression model are integrated to obtain the cable detection model, where the classification model and the regression model are decoupled. Since the classification model itself has the risk of boundary instability, the classification model is only used for identifying the cable neighbouring region, without accurately determining the position thereof. Instead, the regression model is subsequently used for accurately positioning the cable obstacle.

Optionally, a training process of the cable detection model includes:
acquiring a training data set, the training data set including a plurality of training samples, each training sample including a cable obstacle image and the position coordinates of the cable obstacle in the cable obstacle image; and
input the training data set into the cable detection model for training to obtain a trained cable detection model.

The training process includes: determining the cable neighbouring region of each cable obstacle image, and determining a minimum distance corresponding to the connecting line between the position coordinates of each pixel point in the cable neighbouring region and the position coordinates of the cable obstacle, and performing regression training by using the connecting lines corresponding to the minimum distances, the position coordinates of the pixel point corresponding to each connecting line, and the position coordinates of the cable obstacle.

By way of example, during the process of training the cable detection model, a large number of image data sets including the cable obstacle may be collected. The image data sets include a plurality of training samples, and each training sample includes the image itself and the position coordinates of the cable obstacle.

Further, the training data sets are input into the cable detection model for training, the model may be a deep learning model, such as a convolutional neural network model, which is not specifically limited in the embodiments of the present application. During the training process, the model first identifies the cable neighbouring region in each image, then calculates, for each cable neighbouring region, the connecting line distance between the position coordinates of each pixel point and the position coordinates of the cable obstacle, and determines the connecting line with the minimum distance among these connecting lines to accurately position the cable obstacle.

Further, the regression training is performed by using the connecting line corresponding to the minimum distance, the position coordinates of the pixel point corresponding to each connecting line, and the position coordinates of the cable obstacle, such that the model learns these relationships in order to predict the accurate position of the cable obstacle in a new image.

In this way, the model can accurately determine the position of the cable obstacle by calculating the minimum distances and performing the regression training, improving the detection accuracy. Thus, by means of the accurate regression training, the model can decrease errors in position prediction and improve the overall reliability. The cable detection model can automatically learn complex features in the images, reducing the dependence on manual operations.

Optionally, the cable detection model includes a classification model and a regression model; and inputting the training data set into the cable detection model for training to obtain a trained cable detection model includes:
acquiring, for each cable obstacle image, an annotated cable neighbouring region in the cable obstacle image;
inputting the plurality of cable obstacle images and the cable neighbouring region corresponding to each cable obstacle image into the classification model for training, to obtain a trained classification model;
inputting the plurality of cable neighbouring regions and the position coordinates of the cable obstacle in the cable neighbouring regions into the regression model for training, to obtain a trained regression model; and
integrating the trained classification model and the trained regression model to obtain a trained cable detection model.

In this embodiment of the present application, the cable neighbouring region is annotated for each cable obstacle image, which can be completed manually to ensure that the cable neighbouring region in each image is identified. It should be noted that the method for annotating the cable neighbouring region of the cable in the cable obstacle image is not specifically limited in the embodiments of the present application.

By way of example, a plurality of cable obstacle images and cable neighbouring regions corresponding thereto are input into the classification model, the classification model identifies regions possibly including the cable obstacle by learning features in the images, and thus a trained classification model is obtained, so that the cable neighbouring regions can be effectively identified.

The plurality of identified cable neighbouring regions and cable position coordinates corresponding thereto are input into the regression model, the regression model learns the relationships between pixel points within these regions and the cable position coordinates to accurately predict the position of the cable, and thus a trained regression model is obtained, so that the position of the cable obstacle can be accurately determined in the identified cable neighbouring region.

Further, the trained classification model and the trained regression model are integrated to form a complete cable detection model, so that the cable detection model can identify the cable neighbouring region and then accurately determine the position of the cable obstacle within the cable neighbouring region.

In this way, by integrating the classification model and the regression model, a possible cable neighbouring region can be identified, the position of the cable can then be determined accurately, so that the overall detection accuracy is improved. Moreover, the separate training and optimization of the classification model and the regression model make the overall design more modular, and facilitate maintenance and extension. The classification model first narrows the range of the region that requires accurate processing, effectively filtering out unrelated regions, reducing the computational burden of the regression model, and improving the processing efficiency. Thus, the regression model accurately positions the cable obstacle, thereby improving the positioning accuracy.

Optionally, a training process of the regression model includes:
acquiring the position coordinates of each pixel point in the cable neighbouring region;
calculating, for each pixel point, a plurality of distances between the pixel point and a plurality of pixel points corresponding to the cable obstacle respectively by using the position coordinates of the pixel point and the position coordinates of the cable obstacle;
determining a minimum distance among the plurality of distances, and determining a connecting line between the pixel points corresponding to the minimum distance; and
performing the regression training by using the determined connecting line between the pixel points corresponding to the minimum distance, the position coordinates of the pixel point corresponding to each connecting line, and the position coordinates of the cable obstacle.

In this embodiment of the present application, the position coordinates of each pixel point is extracted from the cable neighbouring region for calculating a distance to the cable obstacle.

By way of example, a plurality of distances between each pixel point and the position coordinates of the cable obstacle are calculated. Further, a minimum distance among the plurality of calculated distances is found. This minimum distance represents the closest contact point of the pixel point with the cable obstacle, and a connecting line between the pixel point and the pixel point corresponding to the minimum distance is thus determined, and is used for defining the direct relationship between the pixel point and the cable obstacle.

Further, the regression training is performed by using these connecting lines, the position coordinates of the pixel point corresponding to each connecting line, and the position coordinates of the cable obstacle, such that the regression model can predict the accurate position of the cable obstacle from new data by learning these relationships.

In this way, by using the minimum distance between the pixel points, the model can accurately capture the position of the cable obstacle, improving the positioning accuracy. This minimum distance is determined by precise calculation based on the connecting lines, so that the model can decrease errors in position prediction and improve the overall reliability.

It can be understood that the above method can help the model understand spatial relationships and geometric features in the images, so that the model can better adapt to different images and environments.

Optionally, avoiding the cable obstacle on the basis of the position coordinates includes at least one of the following:
re-planning a cleaning route on the basis of the position coordinates of the cable obstacle, such that the autonomous mobile cleaning device performs a cleaning task along the cleaning route to avoid the cable obstacle;
determining a cleaning exclusion region on the basis of the position coordinates of the cable obstacle, such that the autonomous mobile cleaning device performs cleaning around the cleaning exclusion region and then continues to perform the cleaning task along an originally planned path; and
sending the position coordinates of the cable obstacle to a user terminal for display, and avoiding the cable obstacle in response to a user's control operation.

In some embodiments, after the autonomous mobile cleaning device determines the position coordinates of the cable obstacle, a cleaning route may be recalculated by using a path planning algorithm, such as an A* algorithm or a Dijkstra algorithm, to ensure the avoidance from the cable obstacle. The autonomous mobile cleaning device can then execute the task along the newly planned cleaning route and accordingly effectively avoid the obstacle.

In some other embodiments, after the autonomous mobile cleaning device determines the position coordinates of the cable obstacle, a cleaning exclusion region that the autonomous mobile cleaning device should not enter is determined on the basis of the position coordinates, and the autonomous mobile cleaning device then performs cleaning around the cleaning exclusion region and continues to execute the task along the planned path after completing the cleaning, to ensure that the device can operate efficiently in the complex environment.

It can be understood that the path re-planning or the delimiting of the exclusion region allows the autonomous mobile cleaning device to complete the cleaning task within the shortest time period, improving the overall efficiency.

In yet some embodiments, after the autonomous mobile cleaning device determines the position coordinates of the cable obstacle, the position coordinates of the cable obstacle can be sent to user terminal equipment, such as a smartphone or a computer, such that a user can view the position of the cable obstacle on the terminal and instruct the device to avoid the cable obstacle by means of a control operation. The autonomous mobile cleaning device can adjust the path according to the instruction of the user to avoid the cable obstacle.

It can be understood that by sending the position of the cable obstacle to the user terminal, the user can participate in the control of the device, increasing the flexibility and customization of operation. By providing such real-time information and an interaction function, the user's control experience and satisfaction with the device can be improved.

In this way, after the autonomous mobile cleaning device determines the position coordinates of the cable obstacle, a variety of ways can be provided to adapt to different environmental changes and user demands by avoiding the cable obstacle, and the risk of the device colliding with the cable obstacle can also be reduced while improving the application flexibility, thereby protecting the device and other articles in the environment.

Optionally, the present application further provides a method for controlling the autonomous mobile cleaning device, where the method is applied to a user terminal and includes:
receiving position coordinates of a cable in a cable obstacle image that are determined during execution a cleaning task and sent by the autonomous mobile cleaning device, and visually displaying the position coordinates.

Determining position coordinates of a cable in the cable obstacle image includes:
identifying an obstacle, and acquiring a cable obstacle image upon determining that the obstacle is a cable obstacle; and
determining a cable neighbouring region in the cable obstacle image, determining a connecting line between the position coordinates of each pixel point in the cable neighbouring region and the position coordinates of the cable obstacle, and determining the position coordinates of the cable obstacle on the basis of the connecting lines. The cable neighbouring region includes at least an envelope region of the cable obstacle. The envelope region is an enclosed region created around a boundary of the cable obstacle region.

In the present application, the position coordinates of the cable obstacle are visually displayed on the user terminal, so that the user can visually know the environment around the device and potential cable obstacles and can better understand the operating state and environment of the device.

The user terminal may also be referred to as terminal equipment, user equipment (UE), a mobile station (MS), a mobile terminal, a terminal, etc. In a practical application, the user terminal is, for example, a desktop computer, a laptop computer, a personal digital assistant (PDA), a smartphone, a tablet computer, an on-board device, a wearable device (e.g., a smart watch or a smart bracelet), a smart home device (e.g., a smart display device), etc., which are not specifically limited in the embodiments of the present application.

Optionally, the user can view the position of the cable obstacle detected by the autonomous mobile cleaning device in real time, so that the transparency of operation of the device is improved, and the user more clearly knows the behaviours and decision-making process of the device and thus can make an informed decision on the basis of the position of the visible cable obstacle, for example, adjusting the cleaning route of the autonomous mobile cleaning device or setting a new cleaning exclusion region to improve the cleaning efficiency and the safety.

In this way, by displaying the position of the cable obstacle on the user terminal, a user can take a preventive measure to avoid the collision between the autonomous mobile cleaning device and the cable obstacle, so as to protect the autonomous mobile cleaning device and a surrounding environment.

It should be noted that for the process of the autonomous mobile cleaning device determining the position coordinates of the cable obstacle, reference may be made to the description of the above embodiments, which will not be described in detail here.

By way of example, FIG. 3 is a schematic diagram of a scenario where a user terminal interacts with the autonomous mobile cleaning device according to an embodiment of the present application. As shown in FIG. 3, the scenario includes a floor-cleaning robot 100 and a user terminal 200. After determining the position coordinates of a cable obstacle, the floor-cleaning robot 100 can send the position coordinates of the cable obstacle to the user terminal 200, such that the user terminal 200 displays the position of the cable obstacle. A plurality of black dots, i.e., the determined position coordinates of the cable in the cable obstacle image are present in the image. Optionally, during the visual display, the position coordinates of the cable may be connected together to generate a general shape of the cable obstacle. This process is not specifically limited in the embodiments of the present application.

In this way, by providing the real-time visual content and an interactive function, the opportunity for the user to participate in the operation of the device is increased, and the user experience and satisfaction are improved. Moreover, the user can dynamically adjust cleaning strategies of the device on the basis of the visual content displayed in real time, more accurately control the behaviours of the device, reduce the likelihood of misoperation, and thus reduce the risk of damage to the autonomous mobile cleaning device.

In the foregoing embodiments, the method for controlling an autonomous mobile cleaning device provided by the embodiments of the present application is introduced, and in order to implement the functions in the method provided by the embodiments of the present application, the autonomous mobile cleaning device as the execution entity may include a hardware structure and/or a software module, and the above functions are implemented in the form of the hardware structure, the software module, or a combination of the hardware structure and the software module. Whether one of the above functions is performed in the form of a hardware structure, a software module, or a combination of a hardware structure and a software module depends on the specific application and design constraints of the technical solution.

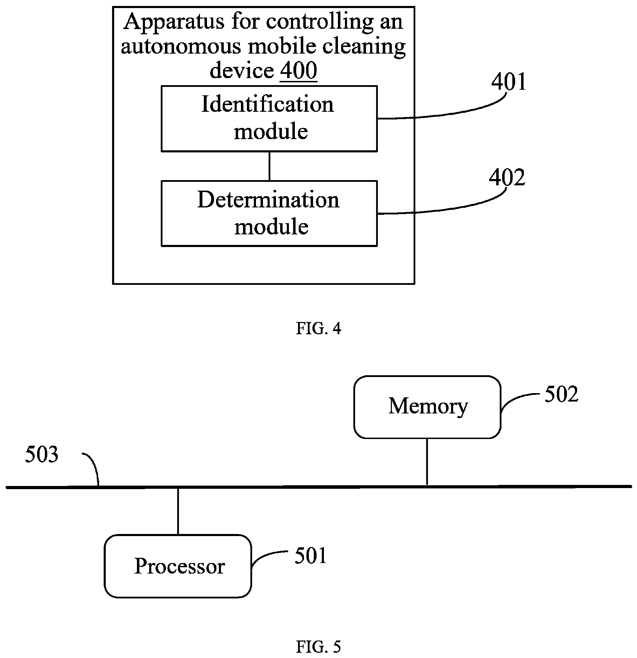

For example, FIG. 4 is a structural schematic diagram of an apparatus for controlling an autonomous mobile cleaning device according to an embodiment of the present application, which is applied to the autonomous mobile cleaning device. As shown in FIG. 4, the apparatus 400 includes:
an identification module 401 configured to identify an obstacle during execution of a cleaning task by the autonomous mobile cleaning device, and acquire a cable obstacle image upon determining that the obstacle is a cable obstacle; and
a determination module 402 configured to determine position coordinates of a cable in the cable obstacle image, and avoid the cable obstacle on the basis of the position coordinates.

The determination module 402 is specifically configured to:
determine a cable neighbouring region in the cable obstacle image, determine a connecting line between the position coordinates of each pixel point in the cable neighbouring region and the position coordinates of the cable obstacle, and determine the position coordinates of the cable obstacle on the basis of the connecting lines. The cable neighbouring region includes at least an envelope region of the cable obstacle. The envelope region is an enclosed region created around a boundary of the cable obstacle region.

Optionally, the determination module 402 includes a first determination unit, which is configured to:
determine the position coordinates of the cable obstacle on the basis of distances of the connecting lines. The distance of each connecting line is a minimum distance of the connecting line between the position coordinates of the corresponding pixel point in the cable neighbouring region and the position coordinates of the cable obstacle.

Optionally, the determination module 402 includes an obstacle avoidance unit, which is configured to:
re-plan a cleaning route on the basis of the position coordinates of the cable obstacle, such that the autonomous mobile cleaning device performs a cleaning task along the cleaning route to avoid the cable obstacle;
determine a cleaning exclusion region on the basis of the position coordinates of the cable obstacle, such that the autonomous mobile cleaning device performs cleaning around the cleaning exclusion region and then continues to perform the cleaning task along an originally planned path; and
send the position coordinates of the cable obstacle to a user terminal for display, and avoid the cable obstacle in response to a user's control operation.

Optionally, the determination module 402 includes a second determination unit, which is configured to:
acquire a predefined neighbourhood window, and calculate a neighbourhood feature of each pixel point of the cable obstacle image within the predefined neighbourhood window; and
perform threshold segmentation on the pixel points of the cable obstacle image according to the neighbourhood features to obtain the cable neighbouring region and a non-cable neighbouring region.

The autonomous mobile cleaning device does not process the non-cable neighbouring region.

Optionally, the first determination unit is specifically configured to:
input the cable obstacle image into a trained cable detection model to predict the position coordinates of the cable obstacle in the cable obstacle image.

Optionally, the cable detection model includes a classification model and a regression model; and the prediction unit is specifically configured to:
input the cable obstacle image into a trained classification model to obtain the cable neighbouring region in the cable obstacle image; and
input the cable neighbouring region into a trained regression model to obtain the position coordinates of the cable obstacle in the cable neighbouring region.

Optionally, the cable detection model is a neural network model based on deep learning.

Optionally, the apparatus 400 further includes a training module, which is configured to:
acquiring a training data set, the training data set including a plurality of training samples, each training sample including a cable obstacle image and the position coordinates of the cable obstacle in the cable obstacle image; and
input the training data set into the cable detection model for training to obtain a trained cable detection model.

The training process includes: determining the cable neighbouring region of each cable obstacle image, and determining a minimum distance corresponding to the connecting line between the position coordinates of each pixel point in the cable neighbouring region and the position coordinates of the cable obstacle, and performing regression training by using the connecting lines corresponding to the minimum distances, the position coordinates of the pixel point corresponding to each connecting line, and the position coordinates of the cable obstacle.

Optionally, the cable detection model includes a classification model and a regression model; and the training module is specifically configured to:
acquire, for each cable obstacle image, an annotated cable neighbouring region in the cable obstacle image;
input the plurality of cable obstacle images and the cable neighbouring region corresponding to each cable obstacle image into the classification model for training, to obtain a trained classification model;
input the plurality of cable neighbouring regions and the position coordinates of the cable obstacle in the cable neighbouring regions into the regression model for training, to obtain a trained regression model; and
integrate the trained classification model and the trained regression model to obtain a trained cable detection model.

Optionally, the training module includes a training sub-module for training the regression model. The training sub-module is specifically configured to:
acquire the position coordinates of each pixel point in the cable neighbouring region;
calculate, for each pixel point, a plurality of distances between the pixel point and a plurality of pixel points corresponding to the cable obstacle respectively by using the position coordinates of the pixel point and the position coordinates of the cable obstacle;
determine a minimum distance among the plurality of distances, and determine a connecting line between the pixel points corresponding to the minimum distance; and
perform the regression training by using the determined connecting line between the pixel points corresponding to the minimum distance, the position coordinates of the pixel point corresponding to each connecting line, and the position coordinates of the cable obstacle.

It should be noted that for the specific implementation principle and effect of the apparatus 400 for controlling an autonomous mobile cleaning device described above, reference may be made to the relevant descriptions and effects of the above embodiments, and will not be described in detail here.

Optionally, the present application further provides an apparatus for controlling an autonomous mobile cleaning device. The apparatus is applied to a user terminal and includes a receiving module. The receiving module is configured to:
receive position coordinates of a cable in a cable obstacle image that are determined during execution a cleaning task and sent by the autonomous mobile cleaning device, and visually display the position coordinates.

Determining position coordinates of a cable in the cable obstacle image includes:
identifying an obstacle, and acquiring a cable obstacle image upon determining that the obstacle is a cable obstacle; and
determining a cable neighbouring region in the cable obstacle image, determining a connecting line between the position coordinates of each pixel point in the cable neighbouring region and the position coordinates of the cable obstacle, and determining the position coordinates of the cable obstacle on the basis of the connecting lines. The cable neighbouring region includes at least an envelope region of the cable obstacle. The envelope region is an enclosed region created around a boundary of the cable obstacle region.

It can be understood that for the specific implementation principle and effect of the apparatus for controlling an autonomous mobile cleaning device described above, reference may be made to the relevant descriptions and effects of the above embodiments, and will not be described in detail here.

An embodiment of the present application further provides an autonomous mobile cleaning device. FIG. 5 shows a structural schematic diagram of the autonomous mobile cleaning device according to the embodiment of the present application. As shown in FIG. 5, the device may include: a processor 501, and a memory 502 communicatively connected to the processor. The memory 502 is configured to store a computer program. The processor 501 executes the computer program stored in the memory 502, to cause the processor 501 to perform the method in any one of the foregoing embodiments.

The memory 502 and the processor 501 may be connected to each other via a bus 503.

An embodiment of the present application further provides a computer-readable storage medium. The computer-readable storage medium stores computer-executable instructions. The computer-executable instructions, when executed by a processor, are configured to implement the method in any one of the foregoing embodiments of the present application.

An embodiment of the present application further provides a chip for running instructions. The chip is configured to perform the method in any one of the foregoing embodiments performed by an autonomous mobile cleaning device in any one of the foregoing embodiments of the present application.

An embodiment of the present application further provides a computer program product. The computer program product includes a computer program. The computer program can implement, when executed by a processor, the method in any one of the foregoing embodiments implemented by the autonomous mobile cleaning device in any one of the foregoing embodiments of the present application.

In the various embodiments provided in the present application, the disclosed apparatus and method may be implemented in another manner. For example, the apparatus embodiment described above is merely an example. For example, the module division is merely logical function division and may be other division during actual implementation. For example, a plurality of modules or components may be combined or integrated into another system, or some features may be ignored or not performed. In addition, the displayed or discussed mutual coupling, direct coupling, or communicative connection may be implemented through some interfaces. The indirect coupling or communicative connection between the apparatuses or modules may be implemented in electrical, mechanical, or other forms.

The modules described as separate components may or may not be physically separate, and components displayed as modules may or may not be physical units. They may be located in one position, or may be distributed on a plurality of network units. Some or all of the modules may be selected based on an actual need to achieve the solutions of the embodiments.

In addition, the functional modules in the embodiments of the present application may be integrated into one processing unit, or each of the modules may exist alone physically, or two or more modules may be integrated into one unit. The unit integrating the above modules may be implemented in the form of hardware, or may be implemented in the form of a software functional unit.

The integrated modules implemented in the form of a software functional module may be stored in a computer-readable storage medium. The software functional module is stored in a storage medium and includes instructions for causing a computer device (which may be a personal computer, a server, a network device, or the like) or a processor to perform part of the steps of the method in the embodiments of the present application.

It should be understood that the processor may be a central processing unit (CPU), or may be another general purpose processor, a digital signal processor (DSP), an application specific integrated circuit (ASIC), or the like. The general purpose processor may be a microprocessor, or the processor may be any conventional processor or the like. The steps of the method disclosed in combination with the present application may be implemented directly by a hardware processor or by a combination of hardware and software modules in the processor.

The memory may include a high-speed random access memory (RAM), or may further include a non-volatile memory (NVM), for example, at least one disk memory, a USB flash disk, a removable hard disk, a read-only memory, a magnetic disk or an optical disk, or the like.

The bus may be an industry standard architecture (ISA) bus, a peripheral component interconnect (PCI) bus, an extended industry standard architecture (EISA) bus, or the like. The bus may be classified into an address bus, a data bus, a control bus, and the like. For convenience of illustration, the bus in the drawings of the present application does not represent only one bus or one type of bus.

The foregoing storage medium may be implemented by any type of volatile or non-volatile storage device or a combination thereof, such as a static random-access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk. The storage medium be any available medium that is accessible to a general purpose or special purpose computer.

An example storage medium is coupled to the processor, enabling the processor to read information from and write information to the storage medium. Certainly, the storage medium may alternatively be a part of the processor. The processor and the storage medium may be located in an application specific integrated circuit (ASIC). Of course, the processor and the storage medium may also be present as discrete components in the autonomous mobile cleaning device or in a master control device.

It should be noted that, for brevity, the foregoing method embodiments are described as a series of action combinations. However, a person skilled in the art is to be aware that the present application is not limited to the order of the described actions, because some steps may be performed in another order or simultaneously according to the present application. In addition, a person skilled in the art is further to be aware that the embodiments described in the description are optional embodiments, and the involved actions and modules are not necessarily needed in the present application.

It should be further noted that, although each step in the flowchart is displayed in succession as indicated by an arrow, these steps are not necessarily performed in succession in the order indicated by the arrow. Unless otherwise explicitly stated herein, an execution order of these steps is not strictly limited, and these steps may be performed in another order. Moreover, at least part of the steps in the flowcharts may include a plurality of sub-steps or a plurality of stages. These sub-steps or stages are unnecessarily executed at the same moment, but instead may be executed at different moments. These sub-steps or stages are unnecessarily sequentially executed, but instead may be executed sequentially or alternately with other steps or at least part of sub-steps or stages of the other steps.

In the foregoing embodiments, the description of the embodiments has respective focuses. For a part that is not described in detail in an embodiment, reference may be made to related descriptions in other embodiments. The technical features of the foregoing embodiments may be combined arbitrarily. To make description concise, not all possible combinations of the technical features of the foregoing embodiments are described. However, the combinations of these technical features shall be considered as falling within the scope of the description provided that no conflict exists.

A person skilled in the art may easily figure out another implementation of the present application after considering the description and practicing the disclosure disclosed herein. The present application is intended to cover any variations, usage, or adaptive changes of the present application. These variations, use, or adaptive changes follow the general principles of the present application and include common knowledge or common technical means in the art which are not disclosed in the present application. The description and the embodiments are merely construed as examples, and the actual scope and spirit of the present application are defined by the following claims.

The foregoing is merely a detailed description of the embodiments of the present application, but the scope of protection of the embodiments of the present application is not limited thereto. Any variations or replacements made within the scope of the technology disclosed in the embodiments of the present application should be covered by the scope of protection of the embodiments of the present application. Therefore, the scope of protection of the present application shall be subject to the scope of protection of the claims.

## Claims

1. A method for controlling an autonomous mobile cleaning device, wherein the method is applied to the autonomous mobile cleaning device and comprises:
identifying an obstacle during execution of a cleaning task by the autonomous mobile cleaning device, and acquiring a cable obstacle image upon determining that the obstacle is a cable obstacle; and
determining position coordinates of a cable in the cable obstacle image, and avoiding the cable obstacle on the basis of the position coordinates,
wherein determining position coordinates of a cable in the cable obstacle image comprises:
determining a cable neighbouring region in the cable obstacle image, determining a connecting line between the position coordinates of each pixel point in the cable neighbouring region and the position coordinates of the cable obstacle, and determining the position coordinates of the cable obstacle on the basis of the connecting lines, the cable neighbouring region comprising at least an envelope region of the cable obstacle, the envelope region being an enclosed region created around a boundary of the cable obstacle region.

2. The method according to claim 1, wherein determining the position coordinates of the cable obstacle on the basis of the connecting lines comprises:
determining the position coordinates of the cable obstacle on the basis of distances of the connecting lines, wherein the distance of each connecting line is a minimum distance of the connecting line between the position coordinates of the corresponding pixel point in the cable neighbouring region and the position coordinates of the cable obstacle.

3. The method according to claim 1 or 2, wherein determining a cable neighbouring region in the cable obstacle image comprises:
acquiring a predefined neighbourhood window, and calculating a neighbourhood feature of each pixel point of the cable obstacle image within the predefined neighbourhood window; and
performing threshold segmentation on the pixel points of the cable obstacle image according to the neighbourhood features to obtain the cable neighbouring region and a non-cable neighbouring region,
wherein the autonomous mobile cleaning device does not process the non-cable neighbouring region.

4. The method according to any one of claims 1-3, wherein determining position coordinates of a cable in the cable obstacle image comprises:
inputting the cable obstacle image into a trained cable detection model to predict the position coordinates of the cable obstacle in the cable obstacle image.

5. The method according to claim 4, wherein the cable detection model comprises a classification model and a regression model; and inputting the cable obstacle image into a trained cable detection model to predict the position coordinates of the cable obstacle in the cable obstacle image comprises:
inputting the cable obstacle image into a trained classification model to obtain the cable neighbouring region in the cable obstacle image; and
inputting the cable neighbouring region into a trained regression model to obtain the position coordinates of the cable obstacle in the cable neighbouring region.

6. The method according to claim 4 or 5, wherein the cable detection model is a neural network model based on deep learning.

7. The method according to any one of claims 4-6, wherein a training process of the cable detection model comprises:
acquiring a training data set, the training data set comprising a plurality of training samples, each training sample comprising a cable obstacle image and the position coordinates of the cable obstacle in the cable obstacle image; and
inputting the training data set into the cable detection model for training to obtain a trained cable detection model; and
the training process comprises: determining the cable neighbouring region of each cable obstacle image, and determining a minimum distance corresponding to the connecting line between the position coordinates of each pixel point in the cable neighbouring region and the position coordinates of the cable obstacle, and performing regression training by using the connecting lines corresponding to the minimum distances, the position coordinates of the pixel point corresponding to each connecting line, and the position coordinates of the cable obstacle.

8. The method according to claim 7, wherein the cable detection model comprises a classification model and a regression model; and inputting the training data set into the cable detection model for training to obtain a trained cable detection model comprises:
acquiring, for each cable obstacle image, an annotated cable neighbouring region in the cable obstacle image;
inputting the plurality of cable obstacle images and the cable neighbouring region corresponding to each cable obstacle image into the classification model for training, to obtain a trained classification model;
inputting the plurality of cable neighbouring regions and the position coordinates of the cable obstacle in the cable neighbouring regions into the regression model for training, to obtain a trained regression model; and
integrating the trained classification model and the trained regression model to obtain a trained cable detection model.

9. The method according to claim 8, wherein a training process of the regression model comprises:
acquiring the position coordinates of each pixel point in the cable neighbouring region;
calculating, for each pixel point, a plurality of distances between the pixel point and a plurality of pixel points corresponding to the cable obstacle respectively by using the position coordinates of the pixel point and the position coordinates of the cable obstacle;
determining a minimum distance among the plurality of distances, and determining a connecting line between the pixel points corresponding to the minimum distance; and
performing the regression training by using the determined connecting line between the pixel points corresponding to the minimum distance, the position coordinates of the pixel point corresponding to each connecting line, and the position coordinates of the cable obstacle.

10. The method according to any one of claims 1-9, wherein avoiding the cable obstacle on the basis of the position coordinates comprises at least one of the following:
re-planning a cleaning route on the basis of the position coordinates of the cable obstacle, such that the autonomous mobile cleaning device performs a cleaning task along the cleaning route to avoid the cable obstacle;
determining a cleaning exclusion region on the basis of the position coordinates of the cable obstacle, such that the autonomous mobile cleaning device performs cleaning around the cleaning exclusion region and then continues to perform the cleaning task along an originally planned path; and
sending the position coordinates of the cable obstacle to a user terminal for display, and avoiding the cable obstacle in response to a user's control operation.

11. A method for controlling an autonomous mobile cleaning device, wherein the method is applied to a user terminal and comprises:
receiving position coordinates of a cable in a cable obstacle image that are determined during execution a cleaning task and sent by the autonomous mobile cleaning device, and visually displaying the position coordinates,
wherein determining position coordinates of a cable in the cable obstacle image comprises:
identifying an obstacle, and acquiring a cable obstacle image upon determining that the obstacle is a cable obstacle; and
determining a cable neighbouring region in the cable obstacle image, determining a connecting line between the position coordinates of each pixel point in the cable neighbouring region and the position coordinates of the cable obstacle, and determining the position coordinates of the cable obstacle on the basis of the connecting lines, the cable neighbouring region comprising at least an envelope region of the cable obstacle, the envelope region being an enclosed region created around a boundary of the cable obstacle region.

12. An autonomous mobile cleaning device, comprising: a processor, and a memory communicatively connected to the processor, wherein
the memory stores computer-executable instructions; and
the processor is configured to execute the computer-executable instructions stored in the memory, to implement the method of any one of claims 1-10.

13. An apparatus for controlling an autonomous mobile cleaning device, wherein the apparatus is applied to the autonomous mobile cleaning device and comprises:
an identification module configured to identify an obstacle during execution of a cleaning task by the autonomous mobile cleaning device, and acquire a cable obstacle image upon determining that the obstacle is a cable obstacle; and
a determination module configured to determine position coordinates of a cable in the cable obstacle image, and avoid the cable obstacle on the basis of the position coordinates,
wherein determining position coordinates of a cable in the cable obstacle image comprises:
determining a cable neighbouring region in the cable obstacle image, determining a connecting line between the position coordinates of each pixel point in the cable neighbouring region and the position coordinates of the cable obstacle, and determining the position coordinates of the cable obstacle on the basis of the connecting lines, the cable neighbouring region comprising at least an envelope region of the cable obstacle, the envelope region being an enclosed region created around a boundary of the cable obstacle region.

14. An apparatus for controlling an autonomous mobile cleaning device, wherein the apparatus is applied to a user terminal and comprises:
a receiving module configured to receive position coordinates of a cable in a cable obstacle image that are determined during execution a cleaning task and sent by the autonomous mobile cleaning device, and visually display the position coordinates,
wherein determining position coordinates of a cable in the cable obstacle image comprises:
identifying an obstacle, and acquiring a cable obstacle image upon determining that the obstacle is a cable obstacle; and
determining a cable neighbouring region in the cable obstacle image, determining a connecting line between the position coordinates of each pixel point in the cable neighbouring region and the position coordinates of the cable obstacle, and determining the position coordinates of the cable obstacle on the basis of the connecting lines, the cable neighbouring region comprising at least an envelope region of the cable obstacle, the envelope region being an enclosed region created around a boundary of the cable obstacle region.

15. A computer-readable storage medium, storing computer-executable instructions, wherein the computer-executable instructions, when executed by a processor, are configured to implement the method of any one of claims 1-11.

16. A computer program product, comprising a computer program, wherein the computer program, when executed by a processor, implements the method of any one of claims 1-11.
